(19) Europäisches Patentamt
European Patent Office
Office européen des brevets

(11) Numéro de publication : **0 030 879**
**B1**

(12) # FASCICULE DE BREVET EUROPÉEN

(45) Date de publication du fascicule du brevet : **25.07.84**

(51) Int. Cl.³ : **C 09 K 3/34**, G 02 F 1/133

(21) Numéro de dépôt : **80401677.2**

(22) Date de dépôt : **21.11.80**

(54) **Mélange de cristaux liquides disquotiques, dispositif électrooptique utilisant un tel mélange, et procédé d'orientation des molécules du mélange.**

(30) Priorité : **07.12.79 FR 7930121**
**22.02.80 FR 8003977**

(43) Date de publication de la demande :
**24.06.81 Bulletin 81/25**

(45) Mention de la délivrance du brevet :
**25.07.84 Bulletin 84/30**

(84) Etats contractants désignés :
**CH DE GB IT LI NL**

(56) Documents cités :
**FR-A- 2 297 201**
**FR-A- 2 312 046**
**FR-A- 2 377 441**
**FR-A- 2 413 735**
**MOLECULAR CRYSTALS AND LIQUID CRYSTALS. vol. 49, no. 6, 1979 Gordon & Breach Science Publishers New York US C. DESTRADE et al.: "Mesomorphic Polymorphism in some disc-like compounds", pages 169-174**
**CHEMICAL ABSTRACTS, vol. 91, 1979, réf. 100.137x, page 586 Columbus, Ohio, US H.T. NGUYEN et al.: "Nematic Disc-Like Liquid Crystals"**
**CHEMICAL ABSTRACTS, vol. 90, 1979, réf. 178.387c, page 679 Columbus, Ohio, US A.M. LEVELUT: "Structure of a disc-like mesophase"**

(73) Titulaire : **THOMSON-CSF**
**173, Boulevard Haussmann**
**F-75379 Paris Cedex 08 (FR)**

(72) Inventeur : **Dubois, Jean-Claude**
**THOMSON-CSF SCPI 173, bld Haussmann**
**F-75360 Paris Cedex 08 (FR)**
Inventeur : **Zann, Annie**
**THOMSON-CSF SCPI 173, bld Haussmann**
**F-75360 Paris Cedex 08 (FR)**
Inventeur : **Hareng, Michel**
**THOMSON-CSF SCPI 173, bld Haussmann**
**F-75360 Paris Cedex 08 (FR)**
Inventeur : **Billard, Jean**
**THOMSON-CSF SCPI 173, bld Haussmann**
**F-75360 Paris Cedex 08 (FR)**

(74) Mandataire : **Wang, Pierre et al**
**THOMSON-CSF SCPI 173, Bld Haussmann**
**F-75379 Paris Cedex 08 (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).



Jouve, 18, rue St-Denis, 75001 Paris, France

**Description**

L'invention concerne un mélange d'un nouveau type de cristaux liquides, dérivés du triphénylène, sensibles au champ électrique et donc utilisables dans les dispositifs électro-optiques ; on les appelle cristaux liquides « disquotiques ».

On sait que les cristaux liquides utilisés jusqu'à maintenant sont soit des cristaux liquides nématiques ou cholestériques, soit des cristaux liquides smectiques. Ces produits sont constitués par des molécules longues dites aussi bâtonnets (rod like en anglais)

On connaît également la constitution des cellules électro-optiques utilisant ces molécules en forme de bâtonnets, nématiques, smectiques ou cholestériques dont on trouvera une revue par exemple dans des articles tels que « Etudes sur les applications à la visualisation des cristaux liquides, les tendances » par M. Hareng et S. Le Berre, Annales de Physique, année 1978, volume 3, page 317, ou « Electrooptical applications of liquid crystals » par J. D. Margerum et Coll. dans le « Journal of Colloid and Interface Science » volume 58, n° 3, Mars 1977.

Récemment des cristaux liquides différents des cristaux liquides en bâtonnets ont été découverts (voir par exemple l'article « Une mésophase disquotique » par J. Billard, J. C. Dubois, Nguyen Huu Tinh et A. Zann, dans le Nouveau Journal de Chimie, volume 2, n° 5, page 535, année 1978). Ces cristaux liquides sont formés de molécules en forme de disque (disc-like) qui sont appelés ici « disquotiques ». De telles molécules existent dans la mésophase carbonée mais n'avaient pas été isolées auparavant. Il existe un polymorphisme disquotique : il y a donc plusieurs types de mésophases disquotiques.

Trois grands types de mésophases caractérisent les cristaux liquides disquotiques : les phases en colonnes, une phase nématique et une phase cholestérique. Les phases en colonnes sont insensibles à un champ électrique de l'ordre de ceux utilisés pour les dispositifs de visualisation. Certains cristaux liquides disquotiques présentent une phase nématique qui, elle, est sensible à un champ électrique mais qui se présente à des températures trop élevées pour que l'on puisse utiliser ces cristaux liquides dans des dispositifs électrooptiques. Par exemple, l'hexaoctyl benzoate de triphénylène possède une phase nématique de 179 °C à 192 °C, ce qui représente une gamme de température trop élevée pour ce genre de dispositif. Cette phase nématique est souvent appelée phase $D_F$. Ce terme sera employé dans la partie de la description qui suit.

La demanderesse a trouvé, dans ses laboratoires, qu'en mélangeant certains dérivés du triphénylène on obtient des cristaux liquides à basse température, présentant une mésophase disquotique dite « à fils » (ou $D_F$) sensible au champ électrique.

La présente invention a pour objet un mélange de cristaux liquides disquotiques, chacun desdits cristaux liquides étant un dérivé hexasubstitué du triphénylène, les substitutions s'effectuant en positions 2, 3, 6, 7, 10 et 11 par des radicaux identiques, ledit mélange étant formé d'au moins deux dérivés, caractérisé en ce que lesdits radicaux répondant aux formules suivantes :

$$C_mH_{2m+1}O-$$

$$C_mH_{2m+1}-$$

$$C_mH_{2m+1}-COO-$$

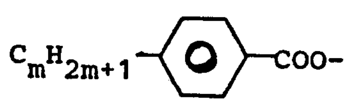

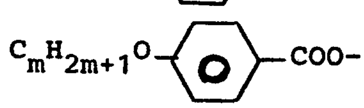

m étant un entier compris entre 4 et 21, le mélange comprend un premier dérivé dont les radicaux de substitution répondent à la formule :

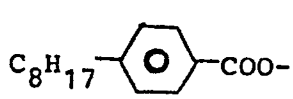

ledit mélange présentant une phase sensible au champ électrique ($D_F$).

L'invention a aussi pour objet un mélange de cristaux liquides disquotiques, chacun desdits cristaux liquides étant un dérivé hexasubstitué du triphénylène, les substitutions s'effectuant en positions 2, 3, 6, 7, 10 et 11 par des radicaux identiques, ledit mélange étant formé d'au moins deux dérivés, caractérisé en ce que lesdits radicaux répondant aux formules suivantes :

$C_mH_{2m+1}O-$

$C_mH_{2m+1}-$

$C_mH_{2m+1}-COO-$

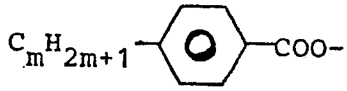

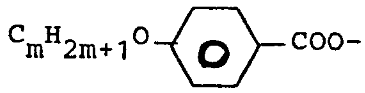

m étant un entier compris entre 4 et 21, le mélange comprend un premier dérivé dont les radicaux de substitution répondent à la formule :

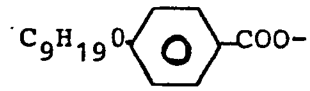

ledit mélange présentant une phase sensible au champ électrique ($D_F$).

L'invention a également pour objet un dispositif électrooptique du type comportant au moins une cellule de visualisation comportant elle-même des moyens de contention d'une lame de cristal liquide et des moyens d'application d'un champ électrique aux molécules du cristal liquide, caractérisé en ce que le cristal liquide est un mélange tel que défini plus haut.

L'invention a enfin pour objet un procédé d'orientations des molécules du cristal liquide utilisé dans le dispositif électro-optique susmentionné.

L'invention sera mieux comprise et d'autres caractéristiques apparaîtront au moyen de la description qui suit, et des dessins qui l'accompagnent, parmi lesquels :

la figure 1 est un schéma de noyau de dérivé du triphénylène ;

la figure 2 représente symboliquement une structure de mésophase disquotique ;

la figure 3 est un croquis explicatif de la sensibilité au champ électrique ;

la figure 4 est un diagramme de phase relatif à un mélange selon l'invention ;

la figure 5 représente symboliquement un groupe de molécules de cristal liquide en mésophase disquotique à fils, en dehors de l'influence d'un champ électrique ;

les figures 6 et 7 représentent l'arrangement des molécules dans une cellule de visualisation ;

la figure 8 représente en coupe une cellule de visualisation à cristal liquide ;

la figure 9 représente un exemple d'électrodes de cellules de visualisation ;

la figure 10 est un schéma éclaté d'un dispositif à effet de champ selon l'invention.

La figure 1 représente un noyau de triphénylène, suivant les conventions habituelles en chimie ; il comporte quatre noyaux aromatiques, à savoir un noyau central hexagonal, sur trois côtés (non consécutifs) duquel sont accolés trois autres noyaux. Si on numérote de 1 à 12 les sommets comportant normalement un atome d'hydrogène (non représenté comme il est d'usage) en tournant autour du noyau central dans le sens inverse des aiguilles d'une montre, on trouve un radical R aux positions 2, 3, 6, 7, 10 et 11. Une telle molécule suggère l'image d'un disque, selon un symbolisme qui semble justifié par ce qui suit.

La figure 2 représente la structure de la mésophase disquotique déduite de l'observation au microscope polarisant. En effet un mélange selon l'invention présente une texture à fils, d'où le nom de mésophase disquotique à fils et le symbole $D_F$ (disquotique à fils) qui est utilisé ci-après. Le seul ordre, dans cette mésophase, est, à l'agitation thermique près, le parallélisme des plans des molécules voisines. Les orientations des molécules dans ces plans et les positions dans l'espace des centres de masse des molécules sont sans ordre.

Les mélanges à mésophase $D_F$ présentent la propriété d'être sensibles au champ électrique. Les molécules de tels mélanges présentent une anisotropie diélectrique : pour un champ électrique faible, de l'ordre de 0,6 volt par micron, la molécule s'oriente dans le champ électrique de telle sorte que l'axe optique (XX représenté figure 1, passant par le centre 0 de la molécule) devient sensiblement parallèle à la direction du champ électrique.

Figure 3 on a représenté une molécule par un disque D, son anisotropie diélectrique par un vecteur p de module $\Delta\varepsilon$ et le champ électrique par un vecteur E ; dans ces conditions la molécule tend à s'orienter en faisant tourner le vecteur d'anisotropie (positive) suivant la flèche F, le mélange étant suffisamment fluide dans le cas de la mésophase pour que les molécules puissent effectivement s'orienter rapidement.

Pour un champ électrique dépassant 0,6 volt par micron (μm) on observe une instabilité électrohydrodynamique qui provoque le phénomène de diffusion de la lumière.

Exemple de mélange selon l'invention :

Le mélange, réalisé à titre d'exemple, comporte :

— 70 % de moles d'un dérivé de la série C avec m = 7, soit $C_7$ ;

— 30 % d'un dérivé de la série D avec m = 8, soit $D_8$.

En faisant varier de 30 à 90 % la proportion de ce dernier dérivé, on obtient également un mélange répondant aux caractéristiques de l'invention.

Les formules des radicaux R sont respectivement :

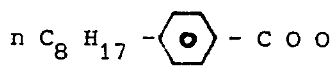 pour le dérivé $D_8$ ;

$n\ C_7H_{15}-COO$ pour le dérivé $D_7$ ;

La synthèse de chaque dérivé se fait en faisant réagir à froid, dans la pyridine, l'hexahydroxy triphénylène et un chlorure d'acide correspondant au radical choisi.

Le diagramme de phase de la figure 4 représente les propriétés du mélange dans le cas le plus général où l'on fait varier les proportions de dérivé $C_7$ de 0 à 100 %. On désigne les différents domaines principaux du diagramme par les symboles suivants :

K pour la phase cristalline solide ;

I pour la phase liquide ;

D pour les phases disquotiques, $D_F$ désignant la phase disquotique à fils de l'invention, $D_X$ une phase disquotique à texture mosaïque, et $D_B$ une phase disquotique à colonnes.

On voit que le mélange de 70 % en moles de $C_7$ et 30 % de $D_8$ très voisin de l'eutectique, présente un premier point de fusion à 47 °C, les caractéristiques de ce mélange étant symbolisées comme suit :

$$K \xrightarrow{47°} D_F \xrightarrow{82°} I$$

Si l'on se place aux deux extrémités du diagramme, on trouve les caractéristiques des dérivés à l'état pur, soit :

pour $D_8$ : $K \xrightarrow{125°} D_X \xrightarrow{179°} D_F \xrightarrow{222°} I$

pour $C_7$ : $K \xrightarrow{66°} D_B \xrightarrow{126°} I$

On obtient un mélange présentant les propriétés analogues en utilisant un dérivé $C_7$ et un dérivé de la série E où l'on aurait :

m = 9.

Le mélange selon l'invention se distingue des cristaux liquides connus par le signe de sa biréfringence : il est optiquement uniaxe négatif.

On a indiqué que les molécules de la phase disquotique à fils présentent une anisotropie diélectrique, ce qui signifie que leur permittivité diélectrique est différente lorsqu'on la mesure dans un champ électrique parallèle à l'axe optique de celle que l'on mesure dans un champ perpendiculaire à l'axe optique.

Dans le cas de l'exemple précité comportant un mélange de 70 % de dérivé $C_7$ et 30 % de $D_8$, on trouve une anisotropie positive :

$$\varepsilon /\!/ - \varepsilon \perp = +0{,}2$$

Grâce aux propriétés signalées ci-dessus des mélanges selon l'invention, on peut obtenir les phénomènes suivants en appliquant à ceux-ci des champs électriques continus ou alternatifs, suivant des intensités et des directions appropriées :

— variation de biréfringence ;

— variation de pouvoir rotatoire du plan de polarisation de la lumière ;

— diffusion dynamique de la lumière.

En ce qui concerne les dispositifs électro-optiques selon l'invention, ils sont du type comportant au moins une cellule de visualisation, comportant elle-même des moyens de contention d'une lame de cristal liquide et des moyens d'application d'un champ électrique aux molécules du cristal liquide. Il est principalement caractérisé en ce que le cristal liquide présente une mésophase disquotique sensible au champ électrique. En outre, sauf dans le cas de la cellule de visualisation par effet dynamique, il est nécessaire d'inclure dans le dispositif des moyens de polarisation de la lumière.

En l'absence de champ électrique, la mésophase disquotique $D_F$ peut être représentée symboliquement par un amas de disques parallèles, dont un échantillon est illustré par la figure 5. On a représenté l'axe optique XX d'une molécule passant par le centre du disque ainsi qu'un vecteur, situé par l'axe XX, dont le module « p » représente l'anisotropie diélectrique de la molécule.

Figure 6, on a représenté partiellement l'arrangement des molécules suivant le même symbolisme qu'en figure 5, dans le cas où elles sont disposées entre deux supports plans 21 et 22 (figurés sans épaisseur) revêtus de dépôts de SiO.

Ces dépôts de SiO, de quelques centaines d'angströms ($10^{-10}$ m) d'épaisseur, ont une structure particulière obtenue de la manière suivante : on dispose en parallèle les deux supports dans un appareil de pulvérisation cathodique en s'arrangeant pour que les dépôts soient effectués obliquement suivant des directions faisant un angle θ avec une parallèle aux supports représentés figure 6 par les flèches 23 et 24. Les dépôts présentent des structures vallonées suivant une même direction perpendiculaire aux flèches. Cette structure favorise l'arrangement des disques parallélement à des plans perpendiculaires aux flèches 23 et 24.

Un champ électrique, symbolisé par une flèche E peut être crée par application d'une différence de potentiel entre les plans 21 et 22, c'est-à-dire entre des électrodes transparentes aménagées sur les supports 21 et 22. Pour une différence de potentiel de quelques volts, typiquement de 0,5 à 6 volts entre des électrodes distantes de 10 microns (µm), on constate une variation de biréfringence qui se traduit entre polariseurs croisés par une variation de couleur. Un dispositif électro-optique peut également être utilisé pour manifester le changement de coloration d'un colorant dichroïque additionné au cristal liquide.

Le changement de biréfringence constaté peut s'expliquer par l'effet d'orientation du champ électrique sur les molécules disquotiques présentant une anisotropie diélectrique du type uniaxe négatif : la molécule s'oriente en présence du champ électrique de façon à ce que le moment dipolaire perpendiculaire au plan du disque, deviennet parallèle au champ électrique, en produisant ainsi un basculement des molécules initialement perpendiculaires aux plans des supports.

Figure 7, on a représenté suivant le même symbolisme, l'arrangement de quelques unes des molécules du cristal liquide placé entre deux supports analogues aux supports 21 et 22 de la figure 6 avec cependant une différence tenant au fait que l'un de ces supports a tourné d'un angle de 90° dans son propre plan. Une suite de molécules 35 à 39, situées à des distances différentes du support 31, a été représenté avec les vecteurs représentant les moments dipolaires p. Le disque 35 est perpendiculaire à la flèche 33 représentant le sens de dépôt de la silice sur le support 31. Le disque 39 est perpendiculaire à la flèche 34 représentant le sens de dépôt de la silice sur le support 32. Les molécules intermédiaires 36 à 38 sont orientées suivant des directions intermédiaires. On peut exprimer ce mode d'arrangement des molécules en disant que les extrémités des vecteurs p sont situées sur une hélice dont le pas est égal à quatre fois la distance entre électrodes. Un tel cristal liquide présente un pouvoir rotatoire de la lumière polarisée. Ce pouvoir rotatoire disparaît quand on établit une différence de potentiel continue de 0,5 à 2 ou 3 volts entre des électrodes disposées sur les supports 31 et 32 distants de 10 microns (µm). En effet, le champ électrique E perpendiculaire aux supports 31 et 32 fait basculer les disques qui deviennent alors parallèles aux électrodes, en supprimant la cause du pouvoir rotatoire et en produisant ainsi une extinction de la lumière, lorsqu'on observe celle-ci, après traversée du cristal liquide, entre deux polariseurs croisés.

Figures 8 et 9, on a représenté une cellule de visualisation et un exemple d'électrodes d'une telle cellule. Figure 10 on a représenté schématiquement la cellule entre deux polariseurs croisés.

La cellule comporte deux supports transparents et isolants 40 et 41 qui sont par exemple deux lames de verre. Ces supports sont recouverts d'électrodes 43 et 44 dont l'une au moins est transparente (une seule dans le cas de la cellule utilisée en lumière réfléchie). Entre ces supports on maintient une distance très faible de l'ordre de 10 microns (µm) à l'aide de cales d'épaisseur 45 et 46 en matériau isolant ; entre les cales on a introduit une goutte de cristal liquide 42. La forme des électrodes peut être soit du type alphanumérique, soit constituée de lignes, les lignes d'une électrode étant perpendiculaire à celles de l'électrode opposée, formant ainsi une matrice de visualisation. Le dispositif peut ou non comporter un diffuseur et un réflecteur.

Figure 10, on a représenté à titre d'exemple un système alphanumérique d'électrodes, dont les chiffres sont à sept éléments tels que l'électrode 51 ; deux autres éléments 52 et 53 complètent le système. Le support opposé comporte une seule électrode 55.

Figure 8, la lumière, émise par une source 61 est polarisée par transmission à travers un polariseur 62 suivant un plan de trace 62, puis transmise par une cellule 63 du type représenté figure 3, faisant tourner le plan de polarisation de 90° lorsqu'aucune tension électrique n'est appliquée entre ses électrodes. On a représenté en 66 la trace sur la face de sortie de la cellule du plan de polarisation de la lumière, et en 67 la trace du même plan sur un polariseur 64 croisé avec le polariseur 62. Dans ces conditions, la lumière est transmise alors qu'il y a extinction si on applique une tension à la cellule 63.

Une cellule de visualisation contenant un cristal liquide en mésophase disquotique peut également être utilisée en faisant appel à l'effet de diffusion dynamique. Les molécules étant du type uniaxe négatif manifestent cet effet sous une tension électrique suffisamment forte, continue ou alternative. Lorsque l'arrangement est homéotrope, c'est-à-dire si l'axe optique des molécules est perpendiculaire aux parois de la cellule, et par conséquent parallèle au champ électrique, on observe l'effet de diffusion dynamique

pour une tension continue de 5 à 6 volts pour un écartement d'électrodes de 10 microns.

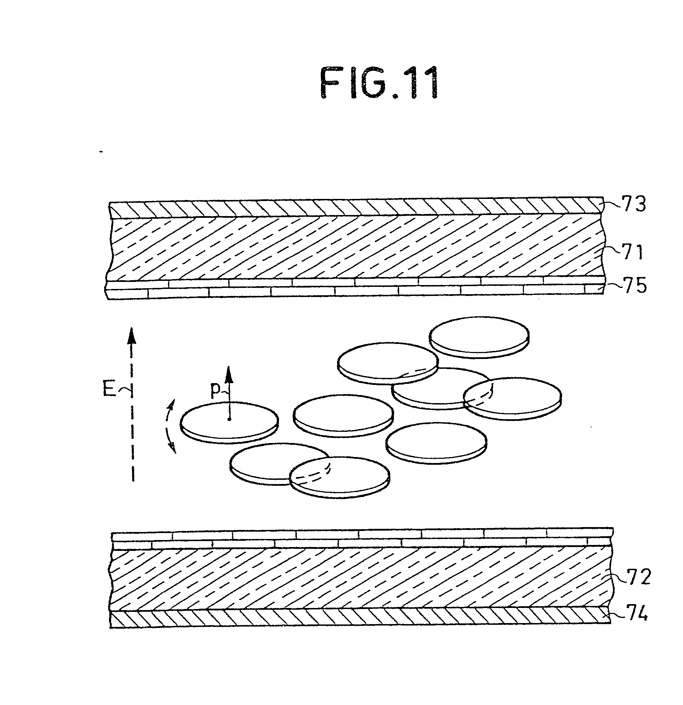

Figure 11, on a représenté un dispositif de visualisation à effet dynamique comportant deux lames de verre 71 et 72, revêtues d'électrodes transparentes 73 et 74, du côté externe, ainsi qu'il a été représenté, mais le plus souvent sur la face interne.

Sur la face interne des lames de verre, c'est-à-dire du côté en contact avec le cristal liquide en mésophase $D_F$, on a déposé, par un procédé décrit ci-après, une couche d'une substance hydrophile 75 dont les molécules aromatiques ont une structure telle que celle de l'acide mellitique de formule développée ;

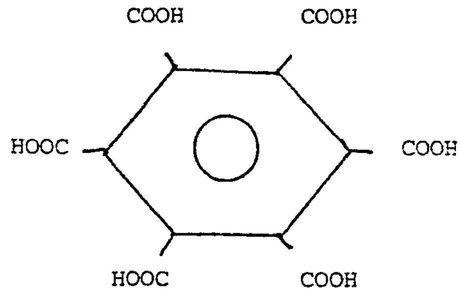

L'hexahydroxybenzène ou l'hexahydroxytriphénylène peut remplacer, pour cet usage, l'acide mellitique ; le résultat obtenu est un arrangement des molécules suivant des positions des disques parallèles aux cellules de la substance, présentant elle-même des cellules parallèles à la paroi.

Lorsqu'on applique la tension électrique entre les électrodes 73 et 74, le champ électrique E qui en résulte (continu ou alternatif) produit une désorganisation des disques. La cellule initialement transparente devient opaline, révélant ainsi la présence du champ électrique.

Le procédé utilisé pour déposer la substance telle que l'acide mellitique consiste à opérer par trempé des lames de verre dans une solution hydro-alcoolique de la substance.

**Revendications**

1. Mélange de cristaux liquides disquotiques, chacun desdits cristaux liquides étant un dérivé hexasubstitué du triphénylène, les substitutions s'effectuant en positions 2, 3, 6, 7, 10 et 11 par des radicaux identiques, ledit mélange étant formé d'au moins deux dérivés, caractérisé en ce que lesdits radicaux répondant aux formules suivantes :

$$C_mH_{2m+1}O-$$

$$C_mH_{2m+1}-$$

$$C_mH_{2m+1}-COO-$$

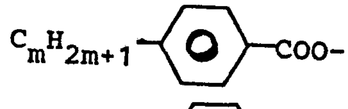

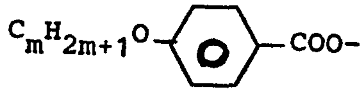

m étant un entier compris entre 4 et 21, le mélange comprend un premier dérivé dont les radicaux de substitution répondent à la formule :

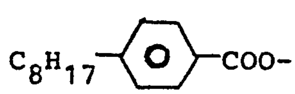

ledit mélange présentant une phase sensible au champ électrique ($D_F$).

2. Mélange de cristaux liquides selon la revendication 1, caractérisé en ce que le second dérivé comporte six radicaux répondant à la formule ;

$$C_7H_{15}—COO—$$

3. Le mélange de cristaux liquides selon la revendication 2, caractérisé en ce que les proportions des premier et second dérivés sont respectivement de 30 % et 70 %.

4. Mélange de cristaux liquides disquotiques, chacun desdits cristaux liquides étant un dérivé hexasubstitué du triphénylène, les substitutions s'effectuant en positions 2, 3, 6, 7, 10 et 11 par des radicaux identiques, ledit mélange étant formé d'au moins deux dérivés, caractérisé en ce que lesdits radicaux répondant aux formules suivantes :

$$C_mH_{2m+1}O-$$

$$C_mH_{2m+1}-$$

$$C_mH_{2m+1}-COO-$$

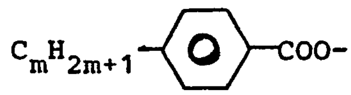

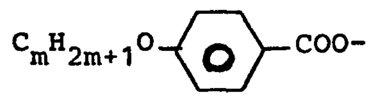

m étant un entier compris entre 4 et 21, le mélange comprend un premier dérivé dont les radicaux de substitution répondent à la formule :

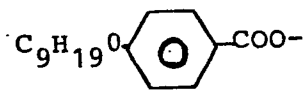

ledit mélange présentant une phase sensible au champ électrique ($D_F$).

5. Mélange de cristaux liquides selon la revendication 4, caractérisé en ce que le second dérivé comporte six radicaux répondant à la formule :

$$C_7H_{15}—COO—$$

6. Dispositif électro-optique du type comportant au moins une cellule de visualisation, comportant elle-même des moyens de contention d'une lame de cristal liquide et des moyens d'applications d'un champ électrique aux molécules du cristal liquide, caractérisé en ce que le cristal liquide est un mélange selon l'une quelconque des revendications 1 à 5.

7. Dispositif suivant la revendication 6, caractérisé en ce que la cellule comporte des parois revêtues d'un dépôt de silice capable, en l'absence de champ électrique, d'orienter les molécules de telle sorte que leurs axes optiques soient parallèles entre eux et parallèles aux parois.

8. Dispositif suivant la revendication 7, caractérisé en ce que les dépôts de silice présentent des orientations décalées de 90° l'une par rapport à l'autre, les molécules du cristal liquide présentant de ce fait une disposition en hélice.

9. Dispositif suivant la revendication 6, caractérisé en ce que la cellule comporte des parois revêtues d'une couche d'acide mellitique, d'hexahydroxybenzène ou d'hexahydroxytriphénylène.

10. Procédé d'orientation des molécules du cristal liquide dans un dispositif suivant la revendication 7, caractérisé en ce que le dépôt de silice est effectué suivant une direction oblique par rapport aux parois qui le reçoivent.

11. Procédé suivant la revendication 10, caractérisé en ce que, les dépôts ayant été effectués sur deux supports parallèles destinés à constituer lesdites parois, on constitue la cellule en faisant tourner l'un de ces supports de 90° par rapport à l'autre.

12. Procédé d'orientation des molécules du cristal liquide dans un dispositif suivant la revendication 9, caractérisé en ce que la couche est obtenue en trempant les supports destinés à constituer les parois de la cellule dans une solution hydroalcoolique d'acide mellitique, d'hexahydroxybenzène ou d'hexahydroxytriphénylène.

**Claims**

1. Mixture of disk-like liquid crystals, each one of said liquid crystals being a hexasubstituted derivative of triphenylene with the substitutions being effected in the 2-, 3-, 6-, 7-, 10- and 11-positions by identical groups, said mixture being formed by at least two derivatives, characterized in that said groups correspond to the following formulae :

$C_mH_{2m+1}O-$

$C_mH_{2m+1}-$

$C_mH_{2m+1}-COO-$

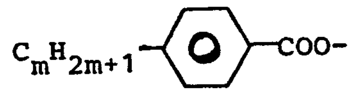

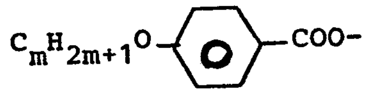

with m being an integer of between 4 and 21, that the mixture comprises a first derivative whose groups of substitution correspond to the formula :

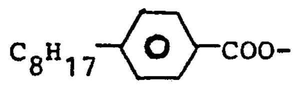

and that said mixture presents a phase sensitive to an electric field ($D_F$).

2. Mixture of liquid crystals according to claim 1, characterized in that the second derivative comprises six groups of the formula :

$C_7H_{15}—COO—$

3. Mixture of liquid crystals according to claim 2, characterized in that the proportions of the first and second derivatives are 30 % and 70 %, respectively.

4. Mixture of disk-like liquid crystals, each one of said liquid crystals being a hexasubstituted derivative of triphenylene with the substitutions being effected in the 2-, 3-, 6-, 7-, 10- and 11-positions by identical groups, said mixture being formed by at least two derivatives, characterized in that said groups correspond to the following formulae :

$C_mH_{2m+1}O-$

$C_mH_{2m+1}-$

$C_mH_{2m+1}-COO-$

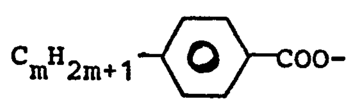

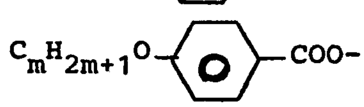

with m being an integer of between 4 and 21, that the mixture comprises a first derivative whose groups of substitution correspond to the formula :

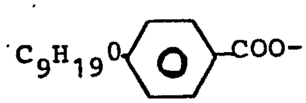

and that said mixture presents a phase sensitive to an electric field ($D_F$).

5. Mixture of liquid crystals according to claim 4, characterized in that the second derivative comprises six groups of the formula :

$C_7H_{15}—COO—$

6. Electro-optical device of the type having at least one display unit, comprising itself means for holding together a lamina of liquid crystal and means for applications of an electric field to liquid crystal

molecules, characterized in that said liquid crystal is a mixture according to any one of claims 1 to 5.

7. Device according to claim 6, characterized in that said unit comprises walls coated with a deposit of silica being capable, in the absence of an electric field, of orienting the molecules such that their optical axes are parallel with respect to each other and parallel to the walls.

8. Device according to claim 7, characterized in that the silica deposits show orientations which, one with respect to the other, are shifted by 90°, the molecules of liquid crystal thus showing a helix disposition.

9. Device according to claim 6, characterized in that said unit comprises walls coated with a layer of mellitic acid, hexahydroxybenzene or hexahydroxytriphenylene.

10. Process of orienting molecules of liquid crystal in a device according to claim 7, characterized in that the deposition of silica is effected in an angular direction with respect to the walls receiving it.

11. Process according to claim 10, wherein the deposition having been carried out on the two parallel supports intended to constitute the said walls, the cell is constituted by shifting one of these supports by 90° with respect to the other.

12. Process of orienting molecules of the liquid crystal in a device according to claim 9, wherein the layer is obtained by soaking the supports intented to constitute the cell in a hydroalcoholic solution of mellitic acid, hexahydroxybenzene or hexahydroxytriphenylene.

**Ansprüche**

1. Gemisch scheibenförmiger Flüssigkristalle, bei dem jeder der Flüssigkristalle ein hexasubstituiertes Triphenylenderivat ist, welches in 2-, 3-, 6-, 7-, 10- und 11-Stellung durch gleiche Reste substituiert ist, wobei das Gemisch aus mindestens zwei Derivaten gebildet ist, dadurch gekennzeichnet, daß die Reste den folgenden Formeln entsprechen :

$$C_mH_{2m+1}O-$$

$$C_mH_{2m+1}-$$

$$C_mH_{2m+1}-COO-$$

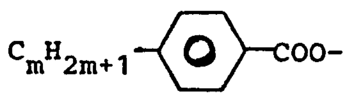

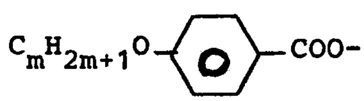

worin m eine ganze Zahl zwischen 4 und 21 ist, und daß das Gemisch ein erstes Derivat enthält, dessen Substituenten der Formel

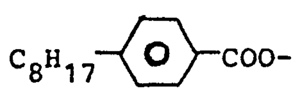

entsprechen, und daß das Gemisch eine gegenüber dem elektrischen Feld ($D_F$) empfindliche Phase aufweist.

2. Flüssigkristallgemisch nach Anspruch 1, dadurch gekennzeichnet, daß das zweite Derivat sechs Reste der Formel $C_7H_{15}$—COO— aufweist.

3. Flüssigkristallgemisch nach Anspruch 2, dadurch gekennzeichnet, daß die Anteile des ersten und zweiten Derivats 30 % bzw. 70 % betragen.

4. Gemisch scheibenförmiger Flüssigkristalle, bei dem jeder der Flüssigkristalle ein hexasubstituiertes Triphenylenderivat ist, welches in 2-, 3-, 6-, 7-, 10- und 11-Stellung durch gleiche Reste substituiert ist, wobei das Gemisch aus mindestens zwei Derivaten gebildet ist, dadurch gekennzeichnet, daß die Reste den folgenden Formeln entsprechen :

$$C_mH_{2m+1}O-$$

$$C_mH_{2m+1}-$$

$$C_mH_{2m+1}-COO-$$

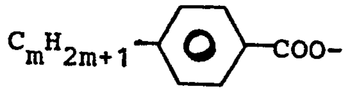

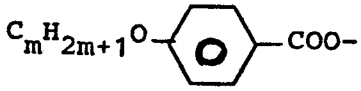

worin m eine ganze Zahl zwischen 4 und 21 ist, und daß das Gemisch ein erstes Derivat enthält, dessen Substituenten der Formel

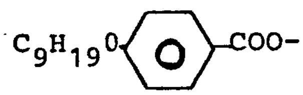

entsprechen, und daß das Gemisch eine gegenüber dem elektrischen Feld ($D_F$) empfindliche Phase aufweist

5. Flüssigkristallgemisch nach Anspruch 4, dadurch gekennzeichnet, daß das zweite Derivat sechs Reste der Formel $C_7H_{15}$—COO— aufweist.

6. Elektro-optische Vorrichtung von der Art, die mindestens eine Display-Zelle aufweist, welche selbst Mittel zum Zusammenhalten eines Flüssigkristallplättchens sowie Mittel zum Anlegen eines elektrischen Feldes an Flüssigkristallmoleküle aufweist, dadurch gekennzeichnet, daß der Flüssigkristall ein Gemisch gemäß einem der Ansprüche 1 bis 5 ist.

7. Vorrichtung nach Anspruch 6, dadurch gekennzeichnet, daß die Zelle Wände aufweist, die mit einer Silizium-oxidauflage beschichtet sind, welche in der Lage ist, in Abwesenheit eines elektrischen Feldes die Moleküle derart zu orientieren, daß ihre optischen Achsen untereinander parallel und gegenüber den Wänden parallel sind.

8. Vorrichtung nach Anspruch 7, dadurch gekennzeichnet, daß die Silizium-oxidauflagen Orientierungen aufweisen, die von einer zur anderen um 90° verschoben sind, wobei die Flüssigkristallmoleküle dadurch eine Helix-Anordnung aufweisen.

9. Vorrichtung nach Anspruch 6, dadurch gekennzeichnet, daß die Zelle Wände aufweist, die mit einer Schicht aus Mellithsäure, Hexahydroxybenzol oder Hexahydroxytriphenylen überzogen sind.

10. Verfahren zur Orientierung von Flüssigkristallmolekülen in einer Vorrichtung gemäß Anspruch 7, dadurch gekennzeichnet, daß die Abscheidung von Silizium-oxid in einer Richtung bewirkt wird, die in bezug auf die Wände, die damit überzogen werden, schräg verläuft.

11. Verfahren nach Anspruch 10, dadurch gekennzeichnet, dass die Auflagen auf zwei parallele Stützen, dazu bestimmt die genannten Wände zu bilden, durchgeführt worden sind, wobei die Zellenbildung durch eine 90° Drehung einer dieser Stützen in Bezug auf der anderen, gebildet wird.

12. Verfahren zur Orientierung von Flüssigkeitkristallmolekülen in einer Vorrichtung gemäss Anspruch 9, dadurch gekennzeichnet, dass die Schicht durch das Eintauchen der Zellwände bildenden Stütze in einer Hydroalkohol, Mellithsäure, Hexahydroxylbenzol oder Hexahydroxytriphenylenlösung erhalten wird.

FIG.1

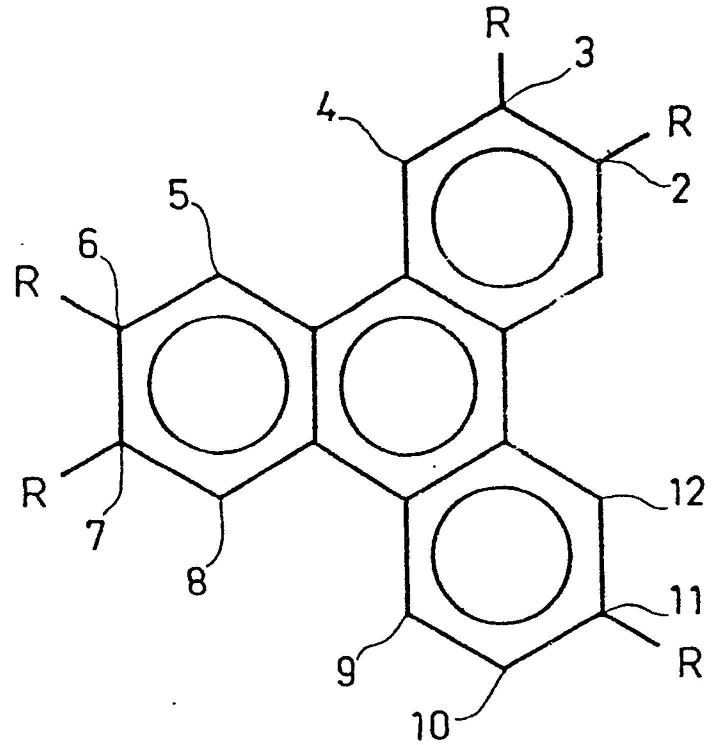

FIG.2

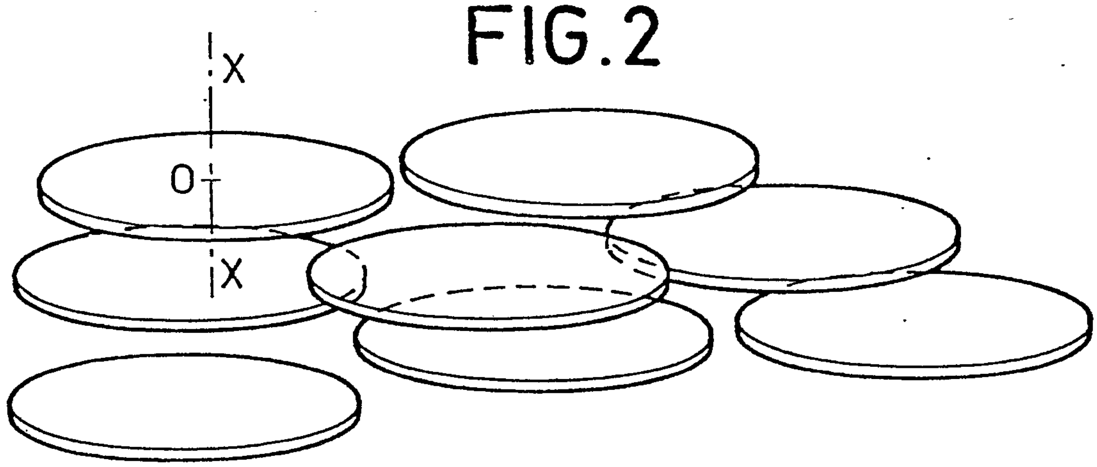


FIG.3

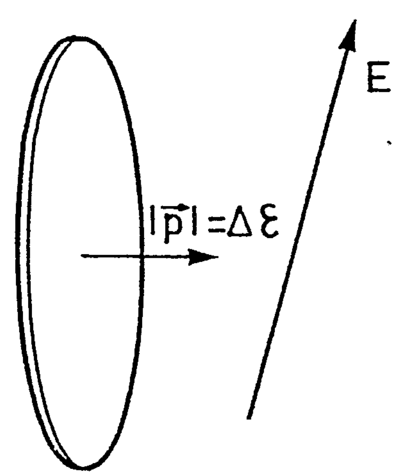

FIG. 4

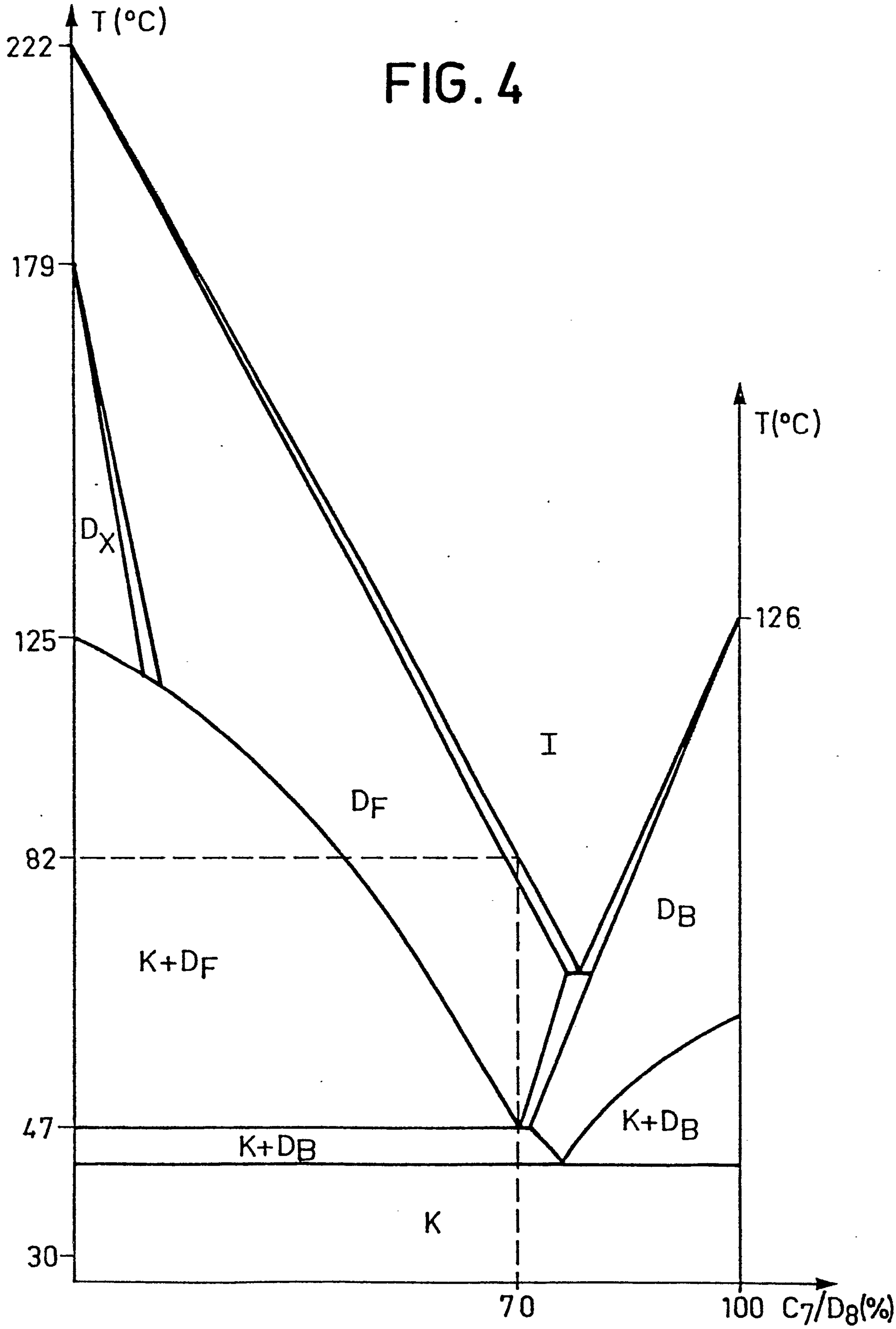

FIG.5

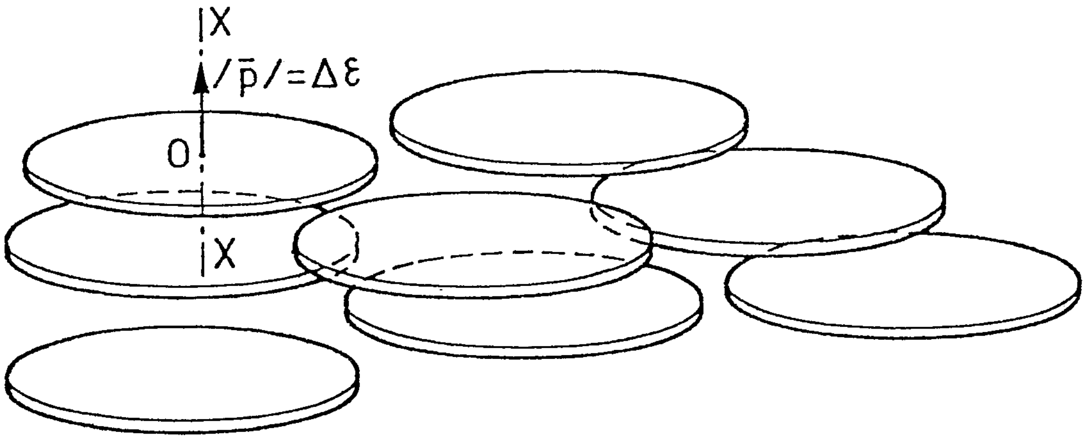


FIG.6

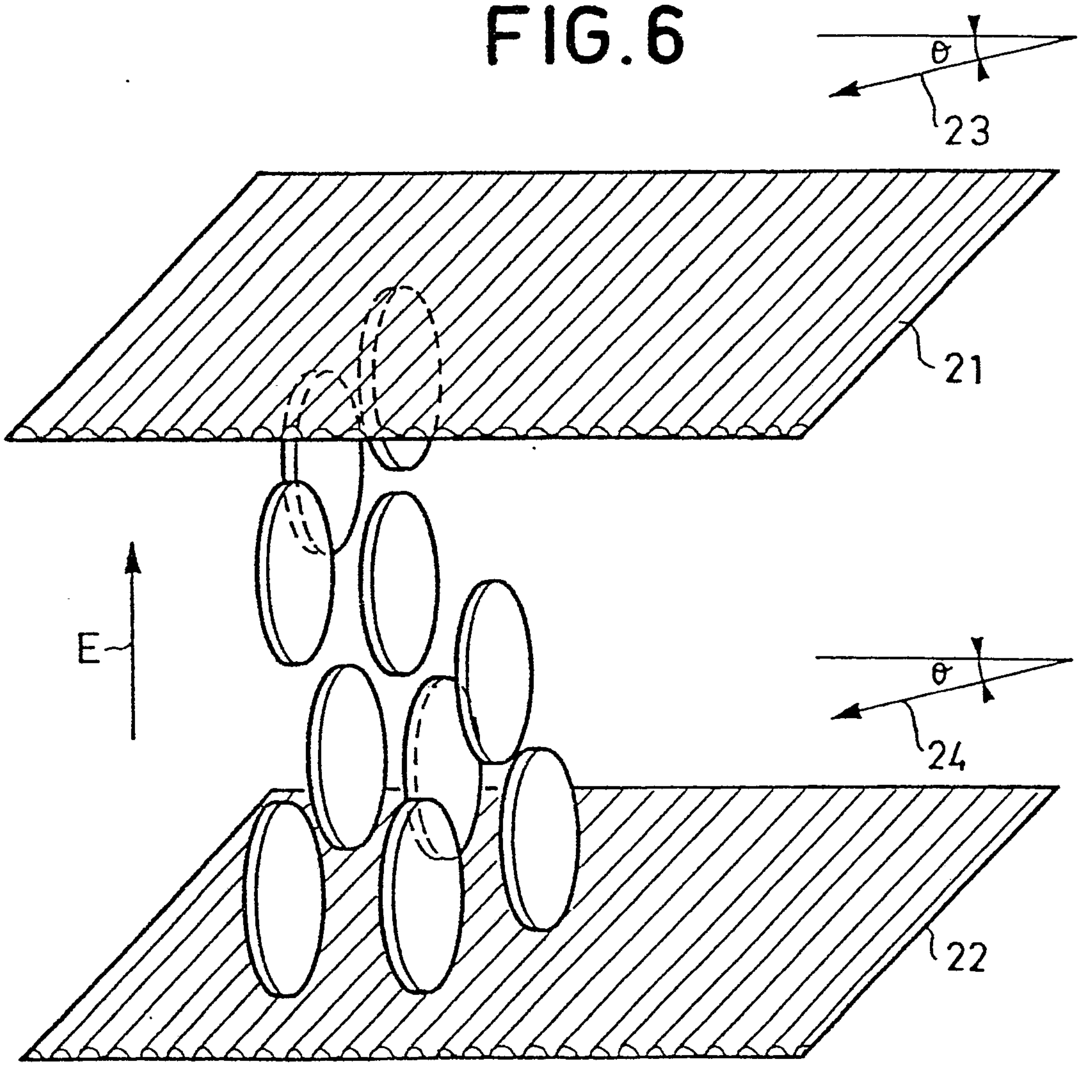

FIG.7

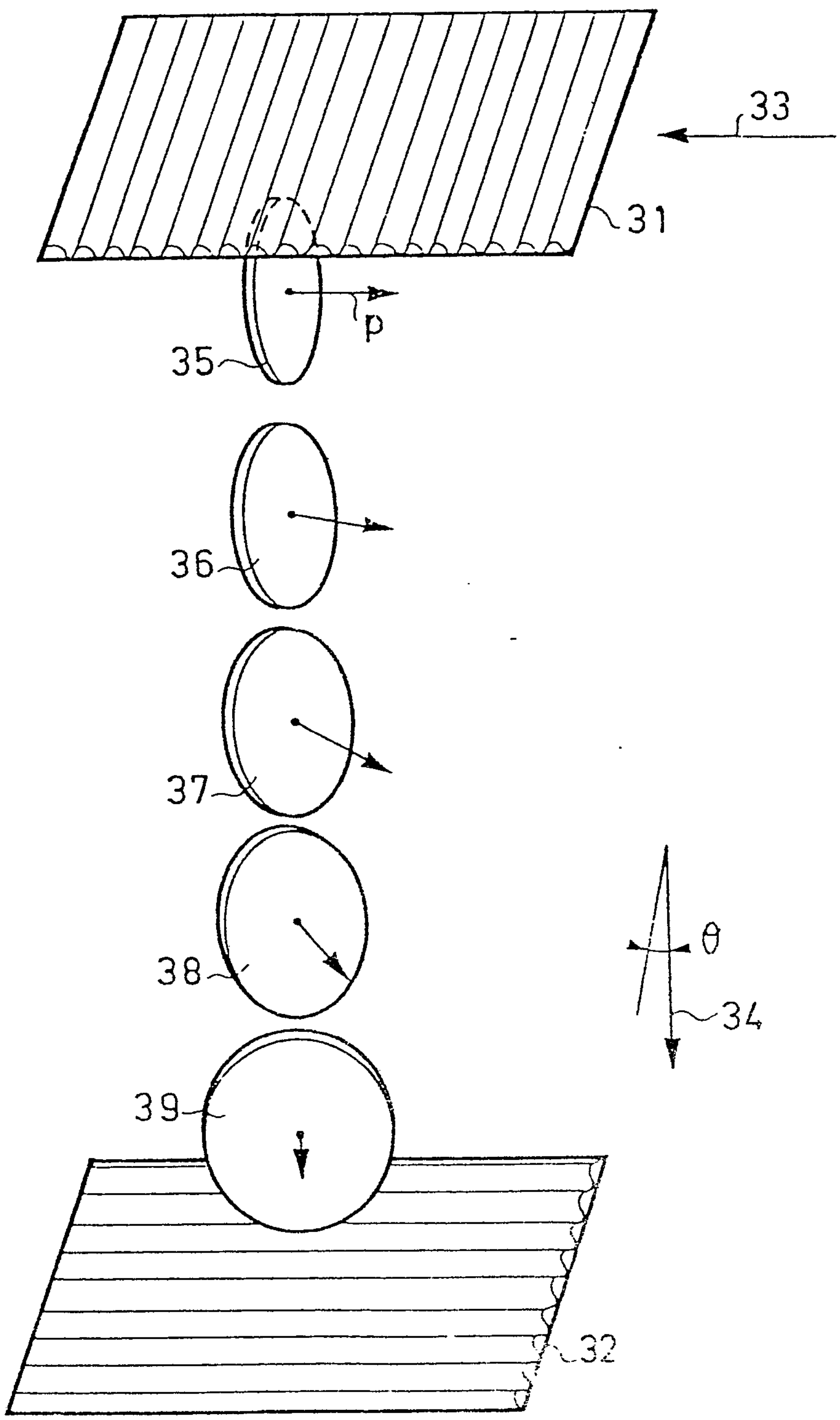

FIG. 8

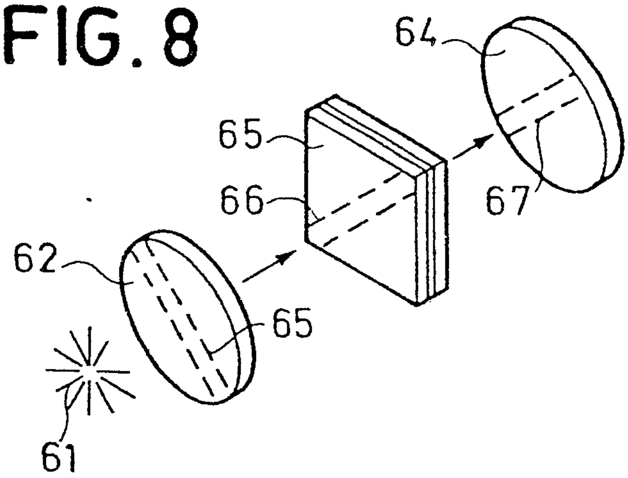


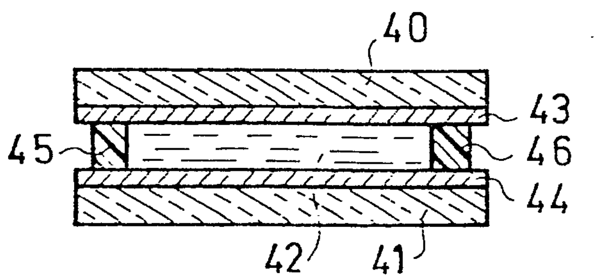


FIG. 9

FIG. 10

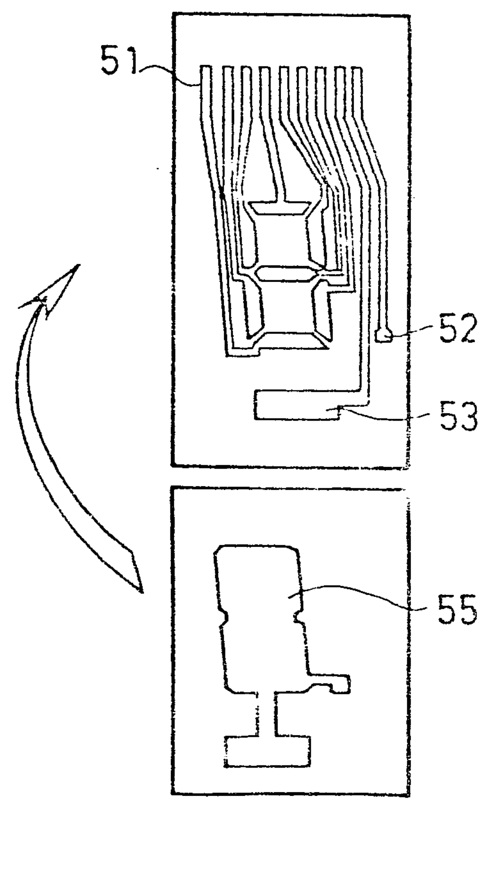

FIG.11